Europäisches Patentamt

(19) European Patent Office

Office européen des brevets

(11) Publication number:

**0 055 830**
**B1**

(12) **EUROPEAN PATENT SPECIFICATION**

(45) Date of publication of patent specification: **22.07.87**

(21) Application number: **81109926.6**

(22) Date of filing: **26.11.81**

(51) Int. Cl.⁴: **A 23 G 9/02, A 23 G 9/24**

(54) **Marshmallow frozen confection.**

(30) Priority: **29.11.80 JP 167385/80**

(43) Date of publication of application:
**14.07.82 Bulletin 82/28**

(45) Publication of the grant of the patent:
**22.07.87 Bulletin 87/30**

(84) Designated Contracting States:
**DE FR GB IT SE**

(56) References cited:
**US-A-1 869 464**
**US-A-2 801 922**
**US-A-4 104 405**
**US-A-4 189 502**

(73) Proprietor: **LOTTE CO., LTD**
**No. 3-20-1, Nishi-Shinjuku**
**Shinjuku-ku Tokyo (JP)**

(72) Inventor: **Takemori, Toshio**
**No. 438, Minami-Ohizumi-cho**
**Nerima-ku Tokyo (JP)**
Inventor: **Kato, Masateru**
**No. 1-256, Numakage**
**Urawa-shi Saitama-ken (JP)**
Inventor: **Masuda, Fumio**
**No. 2170, Naganuma Showa-machi**
**Kita-Katsushika-gun Saitama-ken (JP)**

(74) Representative: **Lamprecht, Helmut, Dipl.-Ing.**
**Corneliusstrasse 42**
**D-8000 München 5 (DE)**

**The file contains technical information
submitted after the application was filed and
not included in this specification**

Courier Press, Leamington Spa, England.

## Description

The invention relates to a marshmallow frozen confection which comprises the marshmallow enclosing a core material capable of retaining its solidity at the temperature below about −15°C.

Marshmallow has been widely utilized as a foodstuff having ample elasticity and has been commercialized as such or as a confection enclosing a jam or bean-jam as a core material.

It has been contemplated that a frozen confection, such as ice cream or sherbet, is incorporated as core material into the marshmallow for providing an unique confection. In the other hand, the frozen confection must be stored usually below about −15°C for retaining its solidity. Marshmallow prepared by the conventional process has a water content of about 10 to 18% for keeping its long shelf stability but hardens upon long storage at deep temperature, such as below −15°C, resulting in considerable decline in taste feeling. US—A—4 104 405 indicates that commercial marshmallow in a typical instance has a moisture content of the order of 15 to 20%.

Accordingly, it is an object of the invention to provide a marshmallow frozen confection which comprises the marshmallow enclosing a core material capable of retaining its solidity at the temperature below about −15°C of which the marshmallow will not harden or meet with a substantial decline of taste feeling upon long storage at deep temperatures.

As a result of repeated experiments for obtaining a marshmallow frozen confection which retains its elasticity upon freezing and encloses as a core material a foodstuff capable of retaining its solidity at temperatures below about −15°C, it has been found that an increase in the water content of the marshmallow may provide a satisfactory product of such type.

Therefore, in accordance with the invention in a marshmallow frozen confection which comprises the marshmallow enclosing a core material capable of retaining its solidity at the temperature below about −15°C, the water content of the marshmallow is in the range of 20 to 35%.

Such a marshmallow frozen confection may be subject of long storage at low temperatures without the marshmallow meeting with hardening or substantial decline of taste feeling.

From US—A—4 189 502 a marshallow variegate for frozen confections is known comprising a frozen matrix made of ice cream or other frozen desserts and a marshmallow incorporated in that matrix. It is the object of this prior art to provide a marshmallow mixture which, when combined with ice cream or other frozen desserts, maintains a sharp line of delineation or demarcation between the frozen dessert matrix and the marshmallow mix. The water content of the marshmallow mix disclosed in US—A—4 189 502 is in the range of more than 44%.

The core material may be selected from so-called frozen confections, such as ice cream, sherbet and the like.

The invention is described hereinbelow with a typical example.

The marshmallow according to the invention was prepared using the following formulation:

| Materials | Amounts (g) |
| --- | --- |
| Water | 1,250 |
| Gelatin | 300 |
| | |
| Water | 1,250 |
| Sugar | 3,500 |
| Starch hydrolysate | 1,500 |
| Inverted sugar | 1,500 |

In accordance with the above formulation, 300 g of gelatin was dissolved in 1,250 g of hot water with stirring, while a syrup was prepared by boiling down 3,500 g of sugar, 1,500 g of starch hydrolysate, 1,500 g of inverted sugar, and 1,250 g of water. The former solution was then added to the syrup and beaten with a beater under violent agitation, and thereafter the mixture was poured into starch for shaping. The mass was kept at room temperature and then freed from the starch by sieving to provide the marshmallow having a water content of about 27%.

An ice cream was enveloped by the marshmallow thus obtained by means of a conventional enveloping machine for bean-jam, and was then shaped. The shaped product was frozen rapidly to provide a final product.

The marshmallow frozen confection thus obtained according to the invention was compared with a commercial marshmallow having a water content of about 15% by storing both of the samples under the temperature condition below −15°C for a given time. The taste feelings evaluated by a panel test are reported in the following table.

# 0 055 830

TABLE 1

Test for preference comparing the marshmallow frozen confection according to the invention (water content of about 27%) with the commercial marshmallow (water content of about 15%).

| Panel member<br>Sample | 1 | 2 | 3 | 4 | 5 | 6 | 7 | 8 | 9 | 10 |
|---|---|---|---|---|---|---|---|---|---|---|
| Marshmallow of the invention | O | O | O | O | O | O | O | O | O | O |
| Commercial marshmallow | X | X | X | X | X | X | X | X | X | X |

As apparent from the above result, the marshmallow sample of the invention was preferred over the commercial one which has much hardened upon cold storing.

In accordance with the invention, a multi-cellular structure of the marshmallow enhances the heat retaining property of frozen food as the core material and improves its shape retention.

## Claims

1. A marshmallow frozen confection which comprises the marshmallow enclosing a core material capable of retaining its solidity at the temperature below about −15°C, wherein the water content of the marshmallow is in the range of 20 to 35%.

2. The marshmallow frozen confection according to claim 1, wherein the core material consists of ice cream.

3. The marshmallow frozen confection according to claim 1, wherein the core material consists of sherbet.

## Patentansprüche

1. Eiskonfekt mit Marshmallows (Schaumnaschwerk) bei welchem das Marshmallow ein Kernmaterial umschließt, das seine Festigkeit bei einer Temperatur unterhalb etwa −15°C behält, wobei der Wassergehalt des Marshmallow im Bereich von 20 bis 35% liegt.

2. Eiskonfekt mit Marshmallows (Schaumnaschwerk) nach Anspruch 1 bei welchem das Kernmaterial aus Eiscreme besteht.

3. Eiskonfekt mit Marshmallows (Schaumnaschwerk) nach Anspruch 1 bei welchem das Kernmaterial aus Scherbett besteht.

## Revendications

1. Une confiserie glacée à la guimauve qui, à l'interieur de la pâte de guimauve, comprend un noyau formé d'une substance capable à garder sa solidité à une temperature à environ moins de −15°C, le teneur en eau de la pâte de guimauve rangeant de 20 à 35%.

2. La confiserie glacée à la guimauve suivant la revendication 1, le noyau de la quelle est de la glace.

3. La confiserie glacée à la guimauve suivant la revendication 1, le noyau de la quelle est du sorbet.

3